Europäisches Patentamt

European Patent Office

Office européen des brevets

(11) Veröffentlichungsnummer: **0 325 942**
**A1**

# EUROPÄISCHE PATENTANMELDUNG

(21) Anmeldenummer: 89100387.3

(22) Anmeldetag: 11.01.89

(51) Int. Cl.⁴: **C01G 37/02**

(30) Priorität: 20.01.88 DE 3801455

(43) Veröffentlichungstag der Anmeldung:
02.08.89 Patentblatt 89/31

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Stockburger, Dieter, Dr.**
**Philipp-Krantz-Strasse 14**
**D-6718 Gruenstadt(DE)**
Erfinder: **Feser, Rainer, Dr.**
**Colgensteiner Weg 25**
**D-6718 Gruenstadt(DE)**
Erfinder: **Grammatis, Zafirios, Dr.**
**Eckenerstrasse 32**
**D-6704 Mutterstadt(DE)**
Erfinder: **Mueller, Norbert, Dr.**
**Maximilianstrasse 23**
**D-6701 Friedelsheim(DE)**
Erfinder: **Ohlinger, Manfred, Dr.**
**Anselm-Feuerbach-Strasse 13**
**D-6710 Frankenthal(DE)**
Erfinder: **Reinicke, Helmut, Dr.**
**Veilchenweg 8**
**D-6718 Gruenstadt(DE)**
Erfinder: **Sartor, Karl-Heinz**
**Haselweg 28**
**D-7607 Neuried(DE)**
Erfinder: **Schlindwein, Heinz**
**Schlesier Strasse 8**
**D-6701 Birkenheide(DE)**
Erfinder: **Steck, Werner, Dr.**
**Auerstrassse 4**
**D-6700 Ludwigshafen(DE)**

(54) **Verfahren zur Herstellung von Chrom(III) oxid.**

(57) Die Erfindung betrifft ein Verfahren zur Herstellung von Chrom(III)oxid durch Reduktion von Chrom(VI)oxid in einer ein reduzierendes Gas enthaltenden Brennerflamme sowie die Verwendung des so hergestellten Chrom-(III)oxids als ein Ausgangsmaterial für die Chromdioxid-Synthese.

EP 0 325 942 A1

## Verfahren zur Herstellung von Chrom(III)oxid

Die Erfindung betrifft ein Verfahren zur Herstellung von Chrom(III)oxid durch Reduktion von feinverteiltem Chrom(VI)oxid in einer Brennerflamme sowie die Verwendung des so hergestellten Chrom(III)oxids als ein Ausgangsmaterial für die Chromdioxid-Synthese.

Es sind eine Reihe von Verfahren bekannt, bei denen zur Herstellung von ferromagnetischem Chromdioxid von Chromoxiden oder von Mischungen von Chromoxiden mit einer durchschnittlichen Wertigkeit von mindestens 4 ausgegangen wird und das Verfahren bei erhöhtem Druck und erhöhter Temperatur in Anwesenheit von Wasser und Modifizierungsmitteln zur Verbesserung der magnetischen Eigenschaften durchgeführt wird. So beschreibt die US-PS 3 278 263 die Herstellung von Chromdioxid unter hydrothermalen Bedingungen mit Chrom(III)oxid und Chrom(VI)oxid als Ausgangsmaterialien. In ähnlicher Weise wird gemäß den US-PSen 3 541 771 und 3 696 039 vorgegangen. Die Herstellung des für diese Synthesen benötigten Chrom(III)oxids geschieht durch Ausfällen eines Chrom(III)oxidhydrates, das entweder als solches oder nach seiner Entwässerung erhalten wird. Auch die Zersetzung von Dichromaten, insbesondere die des Ammoniumdichromats ist bekannt. Da diese Reaktion, bei der das Ammoniumdichromat in Chrom(III)oxid, Stickstoff und Wasser zerfällt, exotherm verläuft, bedarf es sowohl bei der Lagerung als auch bei der Verarbeitung besonderer Vorsichtsmaßnahmen. Es wurde daher schon lange versucht, feuchtes Ammoniumdichromat bei der Herstellung des Chrom(III)oxids einzusetzen. So wird das feuchte Ammoniumdichromat über eine gekühlte Schnecke in einen kontinuierlichen Drehrohrofen eingebracht, in dem es sich nach der durch Aufheizen auf etwa 600°C gestarteten Reaktion aufgrund der exothermen Reaktion ohne weitere Wärmezufuhr zersetzt. Ein auf diese Weise erhaltenes Chrom(III)oxid ist zwar für die Chromdioxid-Synthese geeignet, es fällt jedoch sehr flockig und als inhomogenes Pulver an. Diese nachteiligen Eigenschaften des resultierenden Produkts wirken sich besonders bei seiner Verwendung bei der Chromdioxidsynthese, welche ein äußerst homogenes Gemisch der Reaktionspartner erfordert, aus. Dieser Nachteil konnte zwar inzwischen, wie in der DE-A 36 09 971 beschrieben, durch eine besondere Gestaltung der Zersetzungskammer beseitigt werden, jedoch bleibt der bei der Ammoniumdichromatzersetzung auftretende hohe $NO_x$-Anteil im Abgas.

Aufgabe der Erfindung war es daher, ein Verfahren zur Herstellung von Chrom(III)oxid bereitzustellen, das ein Produkt liefert, das in gleich mäßiger, homogener Form anfällt und sich für die weitere Verarbeitung leicht aufteilen läßt und bei dessen Durchführung ein $NO_x$-Anteil im Abgas gegenüber dem Stand der Technik weitgehend vermieden wird. Außerdem ist Aufgabe der Erfindung, daß sich dieses Verfahren in einfacher und wirtschaftlicher Weise durchführen läßt.

Es wurde nun gefunden, daß sich die gestellte Aufgabe mit einem Verfahren lösen läßt, bei dem ein Strom feinverteilten Chrom(VI)oxids einer ein reduzierendes Gas enthaltenden Brennerflamme zugeführt und damit zum Chrom(III)oxid reduziert wird.

In einer vorteilhaften Ausgestaltung des erfindungsgemäßen Verfahrens wird der Strom an feinverteiltem Chrom(VI)oxid durch Versprühen einer wäßrigen Chrom(VI)oxid-Lösung erzeugt.

Zur Durchführung des erfindungsgemäßen Verfahrens wird ein Strom aus feinverteiltem Chrom(VI)oxid, vorteilhafterweise zusammen mit Wasser, insbesondere als wäßrige 10- bis 60%ige Lösung, mit einem Trägergas, üblicherweise Wasserstoff oder Stickstoff, einer ein reduzierendes Gas enthaltenden Brennerflamme zugeführt. Diese Brennerflamme wird beispielsweise durch Wasserstoff und/oder Erdgas zusammen mit Luft erzeugt. Die Temperatur dieser Brennerflamme wird durch die Menge der zudosierten Luft für die Reaktion bei einer Temperatur zwischen 500 und 700°C einreguliert. Zweckmäßigerweise wird das erfindungsgemäße Verfahren mit Hilfe einer Zweistoffdüse, durch die sowohl die Brennerflamme gespeist als auch der Strom aus feinverteiltem Chrom(VI)oxid geleitet wird, in einem üblichen Flammenrohrreaktor vorgenommen. Bei dem, auf der Grundlage der an sich bekannten Reaktion

$$3H_2 + 2CrO_3 \rightarrow Cr_2O_3 + 3H_2O$$

verlaufenden, erfindungsgemäßen Verfahren wird mit einem gegenüber der durch die Formel angegebenen Stöchiometrie überschüssigen Anteil an reduktiver Komponente vorgegangen. Ein besonders vorteilhafter Bereich ist ein gegenüber der Stöchiometrie 3- bis 15-facher Wasserstoffüberschuß. Für den Fall, daß die Brennerflamme auch unmittelbar mit Wasserstoff betrieben wird, ergibt sich damit ein 6- bis 20-facher Gesamtwasserstoffüberschuß.

In einer besonders zweckmäßigen Ausgestaltung des erfindungsgemäßen Verfahrens wird das bei der Reaktion entstehende Gemisch aus Chrom(III)oxid, Stickstoff, Reaktionswasser und überschüssigem Wasserstoff und/oder Erdgas durch Zugabe von Kaltgas, vorzugsweise von Stickstoff, oder durch Einsprühen von Wasser abgeschreckt, gequencht. Dies läßt sich sowohl durch seitliches Eindüsen des Quenchmediums in den Flammenrohrreaktor als auch durch ein mit der Brennerflamme paralleles Einblasen, vorzugsweise als weitgehend laminare Strömung bewirken.

Das nach dem erfindungsgemäßen Verfahren erhaltene Chrom(III)oxid weist eine Reihe von besonders vorteilhaften Eigenschaften auf. So ergibt sich aus dem Überschuß an reduktiver Komponente eine nahezu quantitative Umsetzung des Chrom(VI)oxids zum Chrom(III)oxid, wodurch der unerwünschte Anteil von Chrom(VI)-haltigen Verbindungen im Chrom(III)oxid nahezu ausgeschaltet wird. Der Chrom(VI)gehalt, gerechnet als $CrO_3$, ist dabei kleiner 10 mg, vorzugsweise kleiner 1 mg je Gramm Endprodukt. Auch ist der . Gehalt an sonstigen Fremdstoffen vernachlässigbar gering, da die Gewinnung von Chromsäure sehr einfach ist, während die Herstellung von Ammoniumdichromat, aus dem nach dem Stand der Technik das Chrom-(III)oxid gewonnen wurde, über 2-stufige Fällungs-Trocknungsverfahren erfolgt und dabei unerwünschte Fremdelemente eingeschleppt werden. Diese größere Reinheit des nach dem erfindungsgemäßen Verfahren erhaltenen Chrom(III)oxids ist besonders wesentlich bei seiner weiteren Verwendung zur Herstellung von Chromdioxid als magnetisches Material für magnetische Aufzeichnungsträger. Dabei wird das Chrom-(III)oxid zusammen mit Chrom(VI)oxid und den bekannten Zusatzstoffen in einer Hydrothermalsynthese in bekannter Weise zum Chromdioxid umgesetzt.

Ein wichtiger Vorteil des erfindungsgemäßen Verfahrens ist auch der bei der Reaktion entstehende äußerst geringe Anteil an $NO_x$, welcher unter 0,1 mg pro Gramm Chrom(III)oxid liegt. Das bedeutet, daß im Abgas weniger als 1 ppm $NO_x$ auftritt. Damit ist der $NO_x$-Anteil um mehr als der Faktor 100 niedriger als bei dem Verfahren nach dem Stand der Technik.

Des weiteren gestattet das erfindungsgemäße Verfahren eine genaue und reproduzierbare Einstellung der Teilchengröße und der spezifischen Oberfläche des Chrom(III)oxids, vorzugsweise im Bereich von 20 bis 45 m²/g. Auch der pH-Wert des Materials läßt sich in weiten Grenzen, beispielsweise zwischen 1 und 7,6 einstellen. Diese Parameter sind ebenfalls von Bedeutung bei der Verwendung des Chrom(III)oxid-Materials als Einsatzstoff bei der Chromdioxidsynthese. Generell ist festzustellen, daß ein nach dem erfindungsgemäßen Verfahren hergestelltes Chrom(III)oxid bei der Weiterverarbeitung zum Chromdioxid ein magnetisches Material mit höherer Koerzitivfeldstärke und größerer spezifischer Oberfläche liefert. Ein weiterer Vorteil ist außerdem, die größere Wirtschaftlichkeit, da das Ausgangsmaterial Chrom(VI)oxid, Chromsäure, einfacher und mit weniger Aufwand zu erhalten ist als das nach dem Stand der Technik verwendete Ammoniumdichromat.

Das erfindungsgemäße Verfahren sei anhand einer Reihe von Versuchen beispielhaft erläutert. Dabei wird das resultierende Chrom(III)oxid durch seine spezifische Oberfläche sowie den Chrom(VI)oxid-Gehalt charakterisiert.

Die spezifische Oberfläche SSA [m²/g] wurde gemäß DIN 66 132 mit einem Ströhlein-Areameter (Firma Ströhlein, Düsseldorf, BRD) nach dem Einpunkt-Differenz-Verfahren nach Haul und Dümbgen bestimmt. Der Chrom(VI)oxid-Gehalt wird kalorimetrisch nach Reaktion mit Diphenylcarbazid nach DIN 53 780 bestimmt.

Beispiel

Zur Herstellung des Chrom(III)oxids wird eine Versuchsanlage, bestehend aus einem zylindrischen, einen Durchmesser von 300 mm aufweisenden Flammenrohrreaktor mit nachgeschaltetem Schlauchfilter zur Produktabscheidung sowie mit einem Wäscher zur Abgasreinigung, eingesetzt.

Der am Kopf des Reaktors zentrisch angeordnete Wasserstoffbrenner wird mit einem Wasserstoffüberschuß betrieben. Die wäßrige Chrom(VI)oxid-Lösung (50%) wird mit Wasserstoff über eine Zweistoffdüse in die Brennerflamme hineingesprüht. Gleichzeitig wird am Reaktorkopf über einen Gasverteiler Stickstoff eingeleitet sowie am Reaktorboden das austretende heiße Reaktionsgemisch durch weiteres Zumischen von kaltem Stickstoffgas abgekühlt.

Bei der Durchführung der Versuche wurde bei verschiedenen Reaktionstemperaturen sowie mit variierenden Durchsatzmengen an Chrom(VI)oxid-Lösungen und Wasserstoffgas (x-faches der stöchiometrischen Menge) vorgegangen. Die Versuchsparameter sowie die Ergebnisse sind in der Tabelle wiedergegeben.

EP 0 325 942 A1

Tabelle

| Versuchs-Nr. | Reaktionstemp. [°C] | Durchsatz CrO₃-Lsg. [kg³/h] | H₂-Menge (x-fach) | H₂-Endkonz. [Vol.%] | Produktion Cr₂O₃ [kg/h] | SSA [m²/g] | CrO₃-Gehalt [mg/g Cr₂O₃] |
|---|---|---|---|---|---|---|---|
| 1 | 650 | 7,0 | 4,1 | 10,6 | 2,6 | 31,9 | 0,8 |
| 2 | 680 | 7,4 | 4,4 | 12,6 | 2,7 | 32,7 | 0 |
| 3 | 748 | 5,9 | 4,4 | 9,3 | 2,2 | 29,5 | 0 |
| 4 | 680 | 9,8 | 3,1 | 10,3 | 3,6 | 25,8 | 0 |
| 5 | 712 | 5,9 | 6,1 | 19,8 | 2,2 | 26,5 | 0 |
| 6 | 650 | 3,0 | 12,4 | 18,6 | 1,1 | 39,9 | 0 |
| 7 | 710 | 3,0 | 11,4 | 16,1 | 1,1 | 37,5 | 0 |
| 8 | 535 | 3,0 | 13,3 | 20,9 | 1,1 | 36,5 | 0 |
| 9 | 595 | 3,0 | 13,1 | 20,4 | 1,1 | 37,8 | 0 |
| 10 | 742 | 3,0 | 8,9 | 11,0 | 1,1 | 32,3 | 0 |

**Ansprüche**

1. Verfahren zur Herstellung von Chrom(III)oxid, dadurch gekennzeichnet, daß ein Strom feinverteilten Chrom(VI)oxids einer ein reduzierendes Gas enthaltenden Brennerflamme zugeführt und damit zum Chrom-(III)oxid reduziert wird.

2. Verfahren gemäß Anspruch 1, dadurch gekennzeichnet, daß der Strom feinverteilten Chrom(VI)oxids durch Versprühen einer wäßrigen Chrom(VI)oxid-Lösung erzeugt wird.

3. Verfahren gemäß Anspruch 1 oder 2, dadurch gekennzeichnet, daß das resultierende Reaktionsgemisch durch Zugabe von Kaltgas oder durch Einsprühen von Wasser abgekühlt wird.

4. Verwendung des nach Anspruch 1 hergestellten Chrom(III)oxids zusammen mit einer Chrom(VI)-oxidverbindung und üblichen Zusatzstoffen zur Synthese von Chromdioxid.

4

Europäisches
Patentamt

**EUROPÄISCHER RECHERCHENBERICHT**

Nummer der Anmeldung

EP 89 10 0387

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 081 213 (E. CATTANEO) * Insgesamt * | 1 | C 01 G 37/02 |
| A | US-A-3 278 263 (N.L. COX) * Spalte 18; Ansprüche 1,4 * | 4 | |

**RECHERCHIERTE SACHGEBIETE (Int. Cl.4)**

C 01 G

Der vorliegende Recherchenbericht wurde für alle Patentansprüche erstellt

| Recherchenort | Abschlußdatum der Recherche | Prüfer |
|---|---|---|
| DEN HAAG | 02-05-1989 | LIBBERECHT-VERBEECK E.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument

EPO FORM 1503 03.82 (P0403)